# EUROPÄISCHE PATENTSCHRIFT

(11) **EP 3 146 011 B1**
(45) Veröffentlichungstag und Bekanntmachung des Hinweises auf die Patenterteilung: **04.07.2018**
(21) Anmeldenummer: 15724965.7
(22) Anmeldetag: 12.05.2015
(51) Int. Cl.: C09K 5/10

(54) **VERFAHREN ZUM BETRIEB EINER ANLAGE MIT SILOXAN-HOCHTEMPERATURFLÜSSIGKEIT**
METHOD FOR OPERATING A SYSTEM USING SILOXANE HIGH-TEMPERATURE FLUID
PROCÉDÉ POUR FAIRE FONCTIONNER UNE INSTALLATION AU MOYEN D'UN LIQUIDE HAUTE TEMPÉRATURE À BASE DE SILOXANE

(30) Priorität: 21.05.2014 DE 102014209670
(43) Veröffentlichungstag der Anmeldung: 29.03.2017
(73) Patentinhaber: Wacker Chemie AG, 81737 München (DE)
(72) Erfinder: AMANN, Manfred, 85235 Odelzhausen (DE); WEIDNER, Richard, 84489 Burghausen (DE); HOFFMANN, Florian, 81479 München (DE); SCHAFFER, Erich, 5122 Duttendorf (AT)
(74) Vertreter: Fritz, Helmut
(86) Internationale Anmeldenummer: PCT/EP2015/060485
(87) Internationale Veröffentlichungsnummer: WO 2015/177000

(56) Entgegenhaltungen:
- WO-A1-01/59029
- DE-A1- 3 611 504
- DE-A1-102011 001 587
- DE-A1-102012 211 258
- US-A- 4 122 109

## Beschreibung

Die vorliegende Erfindung betrifft ein Verfahren zum Betrieb einer Anlage, welche eine Siloxan-Hochtemperaturflüssigkeit (Si-HTF) als Wärmeträgermedium verwendet.

Hochtemperatur-Wärmeträgerflüssigkeiten werden in Anlagen, wie solarthermischen Kraftwerken, insbesondere in solchen mit Parabolrinnen- und Fresnel-Technologie eingesetzt. Je höher die Hochtemperatur-Wärmeträgerflüssigkeiten erhitzt werden können, desto wirtschaftlicher ist der Betrieb der Anlagen. Dadurch sind Hochtemperatur-Wärmeträgerflüssigkeiten jahrelang einer hohen thermischen Belastung bis 400°C und starken Temperaturschwankungen ausgesetzt. Neben der thermischen Belastung bestehen auch nicht thermische Ursachen, welche die Hochtemperatur-Wärmeträgerflüssigkeiten verändern: Verschmutzungen, mangelnde Dichtigkeiten führen zu Kontakten mit Luft, mit Metallen, mit anderen Fluiden, wie Wasser oder Salzen, die als Speichermedium eingesetzt werden. Die Viskosität der Hochtemperatur-Wärmeträgerflüssigkeiten steigt an, was zu einem erhöhten Aufwand an benötigter Pumpleistung führt, um die benötigte Wärmemenge aus der Flüssigkeit zu entnehmen.
Dadurch wird der Betrieb der Anlagen erschwert und schließlich unmöglich gemacht.

Üblicherweise werden als Hochtemperatur-Wärmeträgerflüssigkeiten (HTF) Kohlenwasserstoffe, insbesondere synthetische Öle auf Aromatenbasis, wie zwei-, drei- oder vierkernige Phenyl- oder Phenoxyverbindungen eingesetzt. Diese zersetzen sich mit der Zeit und es bilden sich leichtsiedende Anteile aus meist einkernigen Molekülen. Ebenfalls bilden sich schwersiedende oder nicht siedende Anteile. In DE 102011001587 A und EP 2570163 A sind Verfahren zur destillativen Aufarbeitung von Wärmeträgerflüssigkeiten auf Kohlenwasserstoffbasis beschrieben, bei denen die leichtsiedenden Anteile und die schwersiedenden oder nicht siedende Anteile von den Wärmeträgerflüssigkeiten abgetrennt werden. WO 01/59029 A1 offenbart ein Verfahren zum Betrieb einer Anlage, welche eine Wärmeträgerflüssigkeit für hohe Temperaturen (ein Gemisch umfassend 1,2,3,4-Tetrahydro-(1-phenylethyl)-naphthalen (ST-THN) und ein Alkylbiphenyl) enthält, bei der in bestimmten Zeitabständen die gebrauchte Wärmeträgerflüssigkeit gegen frische oder aufbereitete Wärmeträgerflüssigkeit ausgetauscht wird. Siloxan-Hochtemperaturflüssigkeiten (Si-HTF) sind temperaturstabiler als Wärmeträgerflüssigkeiten auf Kohlenwasserstoffbasis, altern aber ebenso durch die vorstehend genannten Ursachen. Dabei zeigen Si-HTF ein anderes Verhalten. Durch Äquilibrierung entstehen aus linearen Siloxanen teilweise cyclische Siloxane. Daneben bilden sich auch in untergeordenetem Maße und insbesondere bei sehr hohen Temperaturen als Abbauprodukte leichtflüchtige Verbindungen, z.B. Wasserstoff, Methan und Tetramethylsilan. Die leichtflüchtigen Verbindungen werden analog der Vorgehensweise bei organischen HTF bereits im Betrieb aus der Anlage entfernt. Daneben verzweigen Si-HTF durch Bildung von trifunktionellen Siloxaneinheiten, sogenannte T-Einheiten. Die Viskosität der Si-HTF steigt dadurch an. Die ursprüngliche Si-HTF kann nicht etwa durch destillatives Abtrennen der höhermolekularen Bestandteile wie bei den organischen HTF wieder hergestellt werden. D.h. die übliche Betriebsweise einer Anlage wie sie für organische Fluide üblich ist, ist auf den Betrieb mit Si-HTF nicht übertragbar.
US 4122109 und US 4193885 beschreiben den Zusatz metallhaltiger Stabilisatoren sowie optional wasserstoff-haltiger Silicium-Verbindungen zu Si-HTF, um die temperaturabhängige Veränderung der chemischen Zusammensetzung zu unterdrücken und so die Zusammensetzung und die physikalischen Eigenschaften zeitlich stabil zu halten. Aus den Beispielen ist jedoch ersichtlich, dass die Umlagerungen nicht völlig unterdrückt werden können. Da Si-HTF aus Kostengründen in solarthermischen Kraftwerken jedoch jahrelang im Einsatz sind, ist der Stabilisatorzusatz somit für diese Anwendung nicht geeignet, da er die Umlagerungen über diesen Zeitraum hinweg doch nicht verhindern kann und ist durch die durch ihn erhöhten Materialkosten sogar nachteilig. DE 10 2012 211258 A1 offenbart eine Mischung von Siloxanen, welche als Wärmeträgerflüssigkeit (z.B. in solathermischen Kraftwerken) eingesetzt wird. Das Problem der bei thermischer Beanspruchung zeitlich veränderlichen physikalischen Eigenschaften (z.B. Viskosität) wird durch die Verwendung einer speziellen Mischung aus mindestens zwei Methylpolysiloxanen gelöst.

DE 36 11 504 A1 offenbart ein Polyorganosiloxan, welches durch den Zusatz von 0,001-0,05 Gew.% substituierter Anthrachinonverbindungen gegen thermische Alterung stabilisiert wird. Die Aufgabe der Erfindung ist daher, den Betrieb einer Anlage mit Siloxan-Hochtemperaturflüssigkeit (Si-HTF) wirtschaftlicher zu machen.
Gegenstand der Erfindung ist ein Verfahren zum Betrieb einer Anlage, welche eine Siloxan-Hochtemperaturflüssigkeit (Si-HTF) als Wärmeträgermedium verwendet, bei der ein Teil der gebrauchten Si-HTF entfernt wird und durch frische Si-HTF ersetzt wird.
Durch diese Maßnahme wird bei den vorherrschenden Betriebstemperaturen aufgrund der bei den Siliconen stattfindenden Äquilibrierung die gesamte Si-HTF in der Viskosität abgesenkt und die Konzentration der Verzweigungsstellen wird erniedrigt.
Die Betriebsdauer einer Anlage mit Siloxan-Hochtemperaturflüssigkeit (Si-HTF) kann durch das Verfahren nahezu beliebig verlängert werden.
Zudem kann der entfernte Teil der gebrauchten Si-HTF nach bekannten Verfahren aufgearbeitet werden, beispielsweise mit basischen Katalysatoren oder sauren Katalysatoren, wie Phosphornitridchlorid-Katalysatoren gespalten werden und daraus können mit bekannten Äquilibrierverfahren wieder Si-HTF oder andere Siliconprodukte als Wertstoff gewonnen werden. Die auf die beschriebene Weise entnommene gebrauchte Si-HTF ist also ein Wertstoff.

In Anlagen mit Si-HTF wird keine separate Aufarbeitungstechnologie für hochviskose Öle benötigt, wie es in Anlagen mit organischen HTF erforderlich ist.
Insgesamt können bei Si-HTF im Vergleich mit organischer HTF die entstehenden Abfallprodukte signifikant reduziert werden.

Die Menge und Häufigkeit des Austausches an Si-HTF hängt von der Betriebstemperatur ab.

Die Betriebstemperatur des Si-HTF liegt vorzugsweise bei mindestens 400°C, besonders bevorzugt bei 400 bis 450°C, insbesondere bei 420 bis 430°C.

Vorzugsweise werden in 365 Betriebstagen vorzugsweise 1 bis 30 Prozent, insbesondere 2 bis 15 Prozent der in der Anlage vorhandenen Si-HTF ersetzt.

Die Entfernung und der Zusatz von frischer Si-HTF können in Teilmengen oder kontinuierlich erfolgen.

Falls die Entfernung und der Zusatz von frischer Si-HTF in Teilmengen erfolgt werden pro Teilmenge vorzugsweise höchstens 5 Prozent der in der Anlage vorhandenen Si-HTF ersetzt.

Vorzugsweise wird die Rate der Entfernung von gebrauchter Si-HTF und der Zusatz frischer Si-HTF durch Überprüfung der Viskosität der gebrauchten Si-HTF gesteuert.

Vorzugsweise besteht die frische Si-HTF im Wesentlichen aus Methylpolysiloxanen, insbesondere aus linearen oder cyclischen Methylpolysiloxanen oder Gemischen davon.

Bevorzugt sind Methylpolysiloxane, ausgewählt aus linearen Verbindungen der allgemeinen Formel I

Me₃SiO-(Me₂SiO)ₓ-SiMe₃ (I),

und cyclischen Verbindungen der allgemeinen Formel II

(Me₂SiO)_{y} (II),

und deren Gemischen, wobei
- **Me**: Methylrest bedeutet,
- **x**: Werte größer oder gleich Null aufweist und der mit den Stoffmengenanteilen gewichtete arithmetische Mittelwert von **x** über alle linearen Methylpolysiloxane zwischen 3 und 20 liegt und
- **y**: Werte größer oder gleich 3 aufweist und der mit den Stoffmengenanteilen gewichtete arithmetische Mittelwert von **y** über alle cyclischen Methylpolysiloxane zwischen 3 und 6 liegt.

Die Variable **x** nimmt bevorzugt Werte zwischen Null und 100, besonders bevorzugt zwischen Null und 70, ganz besonders bevorzugt zwischen Null und 40 an. Der mit den Stoffmengenanteilen gewichtete arithmetische Mittelwert von **x** über alle linearen Methylpolysiloxane liegt bevorzugt zwischen 4 und 15, besonders bevorzugt zwischen 5 und 10, jeweils einschließlich der genannten Grenzwerte.
Die Variable **y** nimmt bevorzugt Werte zwischen 3 und 100, besonders bevorzugt zwischen 3 und 70, ganz besonders bevorzugt zwischen 3 und 40 an. Der mit den Stoffmengenanteilen gewichtete arithmetische Mittelwert von **y** über alle cyclischen Methylpolysiloxane liegt bevorzugt zwischen 3,5 und 5,5, besonders bevorzugt zwischen 4 und 5, insbesondere zwischen 4 und 4,5, jeweils einschließlich der genannten Grenzwerte.

Das Zahlenverhältnis der Me₃Si-Kettenendgruppen in den Verbindungen der allgemeinen Formel I zur Summe aus Me₂SiO-Einheiten in den Verbindungen der allgemeinen Formeln I und II beträgt vorzugsweise mindestens 1 : 2 und höchstens 1 : 10.
Das Zahlenverhältnis der Me₃Si-Kettenendgruppen in der allgemeinen Formel I zur Summe aus Me₂SiO-Einheiten in den allgemeinen Formeln I und II beträgt bevorzugt mindestens 1 : 2,5 und höchstens 1 : 8, insbesondere bevorzugt mindestens 1 : 3 und höchstens 1 : 6.

Vorzugsweise beträgt die Summe der Anteile aller cyclischen Methylpolysiloxane der allgemeinen Formel II mindestens 10 Massen-% besonders bevorzugt mindestens 12,5 Massen-%, insbesondere mindestens 15 Massen-% und höchstens 40 Massen-%, besonders bevorzugt höchstens 35 Massen-%, und insbesondere höchstens 30 Massen-%.

Die Viskosität der frischen Si-HTF bei 25°C beträgt bevorzugt 1 bis 100 mPa*s, besonders bevorzugt 1 bis 10 mPa*s.

Die frische Si-HTF kann in einer monomodalen, bimodalen oder multimodalen Molmassenverteilung vorliegen, gleichzeitig kann die Molmassenverteilung eng oder breit sein.
Die frische Si-HTF enthält bevorzugt weniger als 1000 ppm Wasser, besonders bevorzugt weniger als 500 ppm Wasser, ganz besonders bevorzugt weniger als 200 ppm Wasser, jeweils bezogen auf die Masse.

Die frische Si-HTF kann hergestellt werden, indem reine Siloxane der allgemeinen Formeln I oder II oder beliebige Gemische von solchen Siloxanen in jedweder Reihenfolge zubereitet, gemischt und zueinander dosiert werden, gegebenenfalls auch mehrfach wiederholend, gegebenenfalls auch abwechselnd oder gleichzeitig. Durch geeignete Verfahren, beispielsweise Destillation, können Siloxane oder Siloxan-Gemische auch wieder entfernt werden. Die Zusammensetzung der frischen Si-HTF wird dabei durch die eingesetzten oder entfernten Mengen von Siloxanen der allgemeinen Formeln I und II gesteuert.
Das Verfahren kann bei Umgebungsdruck durchgeführt werden, beispielsweise bei 1013 hPa, aber auch bei erhöhtem oder erniedrigtem Druck.

Die frische Si-HTF kann weiterhin hergestellt werden, indem geeignete Chlorsilane, Alkoxysilane oder Gemische von Chlorsilanen oder Alkoxysilanen hydrolysiert oder cohydrolysiert und anschließend von Nebenprodukten wie Chlorwasserstoff oder Alkoholen sowie gegebenenfalls von überschüssigem Wasser befreit werden.

Die frische Si-HTF kann außerdem hergestellt werden, indem reine Siloxane der allgemeinen Formeln I oder II oder beliebige Gemische von solchen Siloxanen auf Temperaturen erhitzt werden, bei denen Umlagerungsprozesse stattfinden, so dass Siloxan-Mischungen mit veränderter Zusammensetzung erhalten werden. Das Erhitzen kann in einem offenen oder geschlossenen System stattfinden, bevorzugt unter einer Schutzgasatmosphäre. Das Verfahren kann bei Umgebungsdruck durchgeführt werden, aber auch erhöhtem oder erniedrigtem Druck. Das Erhitzen kann unkatalysiert oder in Gegenwart eines homogenen oder heterogenen Katalysators, beispielsweise einer Säure oder Base, stattfinden. Der Katalysator kann danach deaktiviert oder aus der Siloxan-Mischung entfernt werden, beispielsweise durch Destillation oder Filtration, muß dies aber nicht. Durch geeignete Verfahren, beispielsweise Destillation, können auch Siloxane oder Siloxan-Gemische wieder entfernt werden. Die Zusammensetzung der frischen Si-HTF wird dabei durch das Verhältnis der eingesetzten und gegebenenfalls wieder entfernten Mengen von Siloxanen der allgemeinen Formeln I und II, die Temperatur sowie Art (offenes oder geschlossenes System) und Dauer des Erhitzens gesteuert.

Die drei vorstehend beschriebenen Verfahren können auch kombiniert werden. Sie können optional in Gegenwart eines oder mehrerer Lösungsmittel durchgeführt werden. Bevorzugt wird kein Lösungsmittel verwendet. Die eingesetzten Silane, Silan-Gemische, Siloxane und Siloxan-Gemische sind entweder Standard-Produkte der Silicon-Industrie oder können durch literaturbekannte Synthese-Verfahren hergestellt werden.

Die frische Si-HTF kann gelöste oder suspendierte oder emulgierte Zusatzstoffe enthalten, um ihre Stabilität zu erhöhen oder ihre physikalischen Eigenschaften zu beeinflussen. Gelöste Metall-Verbindungen, beispielsweise Eisen-Carboxylate, können als Radikalfänger und Oxidationsinhibitoren die Haltbarkeit der Si-HTF erhöhen. Suspendierte Zusatzstoffe, beispielsweise Kohlenstoff oder Eisenoxid, können physikalische Eigenschaften eines Wärmeträgers, beispielsweise die Wärmekapazität oder die Wärmeleitfähigkeit, verbessern.

Vorzugsweise beträgt die Summe der Anteile aller Methylpolysiloxane der allgemeinen Formeln I oder II mindestens 95 Massen-%, besonders mindestens 98 Massen-%, insbesondere mindestens 99,5 Massen-%, bezogen auf die gesamte frische Si-HTF.

Vorzugsweise werden bei dem Verfahren die im Betrieb gebildeten geringen Mengen an leicht flüchtigen Gasen, vorzugsweise mit einem Siedepunkt von höchstens 0°C bei 1013 hPa, insbesondere mit einem Siedepunkt von höchstens -50°C bei 1013 hPa, wie Methan und Wasserstoff, abgeführt.

Vorzugsweise werden bei dem Verfahren die flüchtigen Siliciumverbindungen der gebrauchten Si-HTF, wie Silane und lineare Methylpolysiloxane der allgemeinen Formel I, in der **x** die Werte 1 bis 3 bedeutet und cyclische Methylpolysiloxane der allgemeinen Formel II, in der **y** die Werte 3 bis 6 bedeutet, in die Si-HTF der Anlage zurückgeführt.
Vorzugsweise werden die flüchtigen Siliciumverbindungen der gebrauchten Si-HTF durch Kondensation dieser Komponenten mit technisch üblichen Verfahren zurückgewonnen.

Aus der frischen Si-HTF stellt sich mit der in der Anlage vorhandenen gebrauchten Si-HTF ein neues Gleichgewicht ein, welches eine niedrigere Viskosität als die gebrauchte Si-HTF zeigt.

Die im Verfahren betriebene Anlage ist vorzugsweise eine solarthermische Vorrichtung, insbesondere ein Parabolrinnen- oder Fresnel-Kraftwerk. Die Anlage kann aber auch eine Wärmekraftmaschine sein.

Alle vorstehenden Symbole der vorstehenden Formeln weisen ihre Bedeutungen jeweils unabhängig voneinander auf. In allen Formeln ist das Siliciumatom vierwertig. Die Summe aller Bestandteile der Si-HTF ergeben 100 Massen-%.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

Die Beispiele zeigen, dass sich durch Substitution einer geringen Teils des gealterten Si-HTF der Anstieg der Viskosität begrenzt werden kann. Die Substitution kann regelmäßig oder bei Bedarf erfolgen.

### Beispiel 1: Allgemeines Beispiel zur Demonstration der Versuchsdurchführung

Die Substitutionsversuche wurden in 200 ml druckfesten Stahlflaschen durchgeführt, welche mit einem Schraubverschluss versehen waren. Das Si-HTF wurde in die Flaschen in einer Schutzgas Atmosphäre (Argon) eingefüllt. Das Befüllen erfolgte in einer geeignet ausgestatteten Glovebox in welche alle Komponenten (Stahlflasche, Si-HTF) über ein übliches Schleusensystem ein- und ausgeführt werden konnten. Befüllt wurden die Stahlflaschen mit 110 ml des Si-HTF. Verschlossen wurde die Flaschen mit Schraubdeckeln. Als zusätzliche Abdichthilfe der Schraubgewinde wurde eine Dichtpaste verwendet (WS 600, Fa. WEKEM). Das endgültige Festziehen des Deckels erfolgte nach Ausschleusen der Flaschen aus der Glovebox mittels eines Schraubschlüssels.

Die thermische Belastung des Si-HTF erfolgte durch Lagerung der befüllten Stahlflaschen in Öfen bei unterschiedlich hohen Temperaturen, u.a. auch bei Temperaturen über 450°C, um die Effekte des erfindungsgemäßen Verfahrens besonders deutlich zu zeigen. In jedem Versuch wurde zwei Flaschen verwendet. Eine Flasche diente dabei als Referenz um die Entwicklung der Viskosität zu demonstrieren, die andere (Testansatz) um den Effekt der Volumensubstitution zu zeigen. Dazu wurde die beiden Flaschen nach definiertem Zeitraum (1 Woche bis 1 Monat) aus dem Ofen genommen, geöffnet und jeweils eine definierte Probe entnommen. Die Probenmenge betrug dabei 1-30 % des Volumens an Si-HTF. Die Kontrollflasche (Referenz) wurde wieder verschlossen, in der anderen Flasche (Testansatz) wurde das entnommen Volumen durch frisches Si-HTF aufgefüllt. Referenzflasche und Testansatz wurde wieder in den Ofen zurück gestellt. Im Testansatz blieb damit das Volumen des Si-HTF über die Versuchsdauer konstant, im Referenzansatz verringerte es sich. Vorversuche hatten gezeigt, dass sich die Verringerung des Volumens im Vergleich zu einem Ansatz ohne Volumenverringerung nicht signifikant auf die gemessenen Werte auswirkt. Alle Manipulationen erfolgten unter Schutzgasbedingungen wie beschrieben.
Die entnommenen Proben wurden auf ihre Viskosität (dynamische Viskosimetrie) und den Gehalt an T-Strukturen (NMR) analysiert.

### Beispiel 2 (465°C / 20%)

Stahlflaschen wurden wie in Beispiel 1 beschrieben mit einem trimethylendständigen Polydimethylsiloxan mit einer Viskosität von ca. 5 mPas als Si-HTF befüllt und bei 465°C gelagert. In regelmäßigen Abständen (1 Woche) wurden wie im Beispiel 1 beschrieben den Ansätzen Proben entnommen (Referenz) bzw. entnommen und wieder substituiert (Testansatz). Die substituierte Menge betrug dabei 20% (v/v). Die Analyse der Viskosität (Tabelle 1) zeigt, dass sich in den Testansätzen die Viskosität nach 8 Entnahmezyklen nur geringfügig erhöht (4,09 auf 5,19 mPas), während sie sich im Kontrollansatz sehr stark erhöht (4,02 auf 8,14 mPas). Die Analyse der Struktur des Siliconöls unterstreicht und bestätigt dieses Ergebnis. Die Viskosität ist mit der Anzahl an verzweigten Strukturen im Molekül korreliert, welche mit NMR Messungen bestimmt werden können. Der Gehalt an solchen T-Strukturen nimmt im Referenzansatz stark zu, während er im Testansatz nach 8 Zyklen (Wochen) nur geringfügig erhöht ist (Tabelle 2)

**Tabelle 1 (Bsp. 2): Viskositätsentwicklung in Testansatz (Substitution) und Referenzansatz (Kontrolle) innerhalb von 8 Austauschzyklen (1 Zyklus = 1 Woche)**

| | Zyklus | Wochen | 1 | 2 | 3 | 4 | 5 | 6 | 7 | 8 |
|---|---|---|---|---|---|---|---|---|---|---|
| Testansatz | Substitution | [mPas] | 4,09 | 4,48 | 4,77 | 4,93 | 5,05 | 5,15 | 5,2 | 5,19 |
| Referenz | Kontrolle | [mPas] | 4,02 | 4,3 | 4,53 | 4,81 | 5,24 | 6 | 6,84 | 8,14 |

**Tabelle 2 (Bsp. 2): Entwicklung des Gehalts an T-Gruppen in Testansatz (Substitution) und Referenzansatz (Kontrolle) innerhalb von 8 Austauschzyklen (1 Zyklus = 1 Woche)**

| | Zyklus | [Wochen] | 1 | 2 | 3 | 4 | 5 | 6 | 7 | 8 |
|---|---|---|---|---|---|---|---|---|---|---|
| Testansatz | Anteil T-Gruppen | [%] | 0,298 | 0,6 | 0,844 | 0,66 | 0,826 | 1,01 | 1,14 | 0,65 |
| Referenz | Anteil T-Gruppen | [%] | 0,724 | 0,8 | 0,52 | 0,922 | 0,896 | 1,69 | 1,62 | 1,99 |

### Beispiel 3 (465°C / 30%)

Stahlflaschen wurden wie in Beispiel 1 beschrieben mit einem trimethylendständigen Polydimethylsiloxan mit einer Viskosität von ca. 5 mPas als Si-HTF befüllt und bei 465°C gelagert. In regelmäßigen Abständen (1 Woche) wurden wie im Beispiel 1 beschrieben den Ansätzen Proben entnommen (Referenz) bzw. entnommen und wieder substituiert (Testansatz). Die substituierte Menge betrug dabei 30% (v/v). Die Analyse der Viskosität (Tabelle 3) zeigt, dass sich in den Testansätzen die Viskosität nach 8 Entnahmezyklen nur geringfügig erhöht (3,79 auf 4,3 mPas), während sie sich im Kontrollansatz sehr stark erhöht (auf 5,84 mPas). Die Analyse der Struktur des Siliconöls unterstreicht und bestätigt dieses Ergebnis. Die Viskosität ist mit der Anzahl an verzweigten Strukturen im Molekül korreliert, welche mit NMR Messungen bestimmt werden können. Der Gehalt an solchen T-Strukturen nimmt im Referenzansatz stark zu (240%), während er im Testansatz nach 8 Zyklen (Wochen) annähernd konstant bleibt (Tabelle 4: Gehalt an T-Gruppen).

**Tabelle 3 (Bsp. 3): Viskositätsentwicklung in Testansatz (Substitution) und Referenzansatz (Kontrolle) innerhalb von 8 Austauschzyklen (1 Zyklus = 1 Woche)**

| | | Zyklus | [Wochen] | 1 | 2 | 3 | 4 | 5 | 6 | 7 | 8 |
|---|---|---|---|---|---|---|---|---|---|---|---|
| Testansatz | Substitution | Viskosität | [mPas] | 3,79 | 3,87 | 4,16 | 4,23 | 4,26 | 4,28 | 4,3 | 4,3 |
| Referenz | Kontrolle | Viskosität | [mPas] | 4,02 | 4,25 | 4,25 | 4,47 | 4,81 | 4,98 | 5,85 | 5,84 |

**Tabelle 4 (Bsp. 3): Entwicklung des Gehalts an T-Gruppen in Testansatz (Substitution) und Referenzansatz (Kontrolle) innerhalb von 8 Austauschzyklen (1 Zyklus = 1 Woche)**

| | | Zyklus | [Wochen] | 1 | 2 | 3 | 4 | 5 | 6 | 7 | 8 |
|---|---|---|---|---|---|---|---|---|---|---|---|
| Testansatz | Substitution | Anteil T | [%] | 0,49 | 0,537 | 0,61 | 0,606 | 0,46 | 0,447 | 0,395 | 0,43 |
| Referenz | Kontrolle | Anteil T | [%] | 0,6 | 0,76 | 0,83 | 0,809 | 0,83 | 1,01 | 1,55 | 1,46 |

### Viskositätsbestimmung von Si-HTF

Die Bestimmung der dynamischen Viskosität (in mPas) erfolgte mittels eines Rotationsviskosimeter (Rheometer MCR 302 Anton Paar GmbH, Deutschland) bei 25°C. Verwendet wurde ein Messsystem Platte / Kegel 50 mm / 1°.

Eine Messreihe bestand jeweils aus 11 Messpunkten (Messdauer je 6 Sekunden) mit einer Schubspannungsvorgabe von 1 bis 5 Pa linear. Die Probenmenge betrug 1-5 ml.

Die Auswertung erfolgte nach Newton.

### Messung des Gehalts an T-Gruppen (29Si-NMR)

Die Bestimmung des Anteils an T-Gruppen in der Siliconstruktur des Si-HTF wurde mittels üblicher spektroskopischer Verfahren der Kernresonanzspektroskopie (29Si-NMR) durchgeführt. Das Integral der T-Werte wurde dazu mit der Gesamtsumme der Integralwerte für M-Gruppen (Kettenenden Me₃SiO- bzw. C₃SiO), S-Gruppen (freie Silane (z.B. Me₄Si bzw. ins Polymer eingebaute Gruppen C₄Si), D-Gruppen (Kettenglieder -Me₂SiO- bzw. C₂SiO₂), T-Gruppen (Verzweigungspunkte MeSiO₃) und Q-Gruppen (Vernetzungspunkte SiO₄) in Beziehung gesetzt (% T).

Die Messungen erfolgten mit einem NMR-Spektrometer der Fa. Bruker (Avance 3 HD, 500 MHz) in deuteriertem Chloroform (CDCl₃).

## Patentansprüche

1. Verfahren zum Betrieb einer Anlage, welche eine Siloxan-Hochtemperaturflüssigkeit (Si-HTF) als Wärmeträgermedium verwendet, bei der ein Teil der gebrauchten Si-HTF entfernt wird und durch frische Si-HTF ersetzt wird.

2. Verfahren nach Anspruch 1, bei dem die Betriebstemperatur des Si-HTF bei mindestens 400°C liegt.

3. Verfahren nach Anspruch 1 oder 2, bei dem die frische Si-HTF im Wesentlichen aus Methylpolysiloxanen besteht.

4. Verfahren nach Anspruch 3, bei dem die Methylpolysiloxane, ausgewählt werden aus linearen Verbindungen der allgemeinen Formel I
Me₃SiO-(Me₂SiO)ₓ-SiMe₃ (I),
und cyclischen Verbindungen der allgemeinen Formel II
(Me₂SiO)_{y} (II),
und deren Gemischen, wobei
**Me** Methylrest bedeutet,
**x** Werte größer oder gleich Null aufweist und der mit den Stoffmengenanteilen gewichtete arithmetische Mittelwert von **x** über alle linearen Methylpolysiloxane zwischen 3 und 20 liegt und
**y** Werte größer oder gleich 3 aufweist und der mit den Stoffmengenanteilen gewichtete arithmetische Mittelwert von **y** über alle cyclischen Methylpolysiloxane zwischen 3 und 6 liegt.

5. Verfahren nach einem oder mehreren der vorangehenden Ansprüche, bei dem die Viskosität der frischen Si-HTF bei 25°C 1 bis 100 mPa*s beträgt.

6. Verfahren nach einem oder mehreren der vorangehenden Ansprüche, bei dem_in 365 Betriebstagen 1 bis 30 Prozent der in der Anlage vohandenen Si-HTF ersetzt werden.

7. Verfahren nach einem oder mehreren der vorangehenden Ansprüche, bei dem der entfernte Teil der gebrauchten Si-HTF aufgearbeitet und als frische Si-HTF wieder in die Anlage zurückgeführt wird.

8. Verfahren nach einem oder mehreren der vorangehenden Ansprüche, bei dem die im Verfahren betriebene Anlage eine solarthermische Vorrichtung oder Wärmekraftmaschine ist.

## Claims

1. Method of operating a plant which employs a siloxane high-temperature fluid (Si-HTF) as heat-transfer medium, where a portion of the used Si-HTF is removed and replaced with fresh Si-HTF.

2. Method according to Claim 1, where the operating temperature of the Si-HTF is not less than 400°C.

3. Method according to Claim 1 or 2, where the fresh Si-HTF is composed substantially of methylpolysiloxanes.

4. Method according to Claim 3, where the methylpolysiloxanes are selected from linear compounds of general formula I
Me₃SiO-(Me₂SiO)ₓ-SiMe₃ (I),
and cyclic compounds of general formula II
(Me₂SiO)_{y} (II),
and mixtures thereof, wherein
**Me** represents a methyl radical,
**x** has values greater than or equal to zero and the arithmetic
mean of **x** over all linear methylpolysiloxanes, weighted
by the amount-of-substance fractions, is between 3 and 20, and
**y** has values greater than or equal to 3 and the arithmetic
mean of **y** over all cyclic methylpolysiloxanes, weighted
by the amount-of-substance fractions, is between 3 and 6.

5. Method according to one or more of the preceding claims, where the viscosity of the fresh Si-HTF at 25°C is 1 to 100 mPa*s.

6. Method according to one or more of the preceding claims, where in 365 operating days 1 to 30 percent of the Si-HTF in the plant is replaced.

7. Method according to one or more of the preceding claims, where the removed portion of the used Si-HTF is worked up and recycled back into the plant as fresh Si-HTF.

8. Method according to one or more of the preceding claims, where the plant operated in the method is a solar thermal apparatus or heat engine.

## Revendications

1. Procédé d'exploitation d'une unité, qui utilise un liquide haute température à base de siloxane (Si-HTF) en tant que milieu caloporteur, selon lequel une partie du Si-HTF usagé est éliminée et remplacée par du Si-HTF frais.

2. Procédé selon la revendication 1, selon lequel la température d'exploitation du Si-HTF est d'au moins 400 °C.

3. Procédé selon la revendication 1 ou 2, selon lequel le Si-HTF frais est essentiellement constitué de méthylpolysiloxanes.

4. Procédé selon la revendication 3, selon lequel les méthylpolysiloxanes sont choisis parmi les composés linéaires de formule générale I
Me₃SiO-(Me₂SiO)ₓ-SiMe₃ (I)
et les composés cycliques de formule générale II
(Me₂SiO)_{y} (II)
et leurs mélanges,
**Me** signifiant un radical méthyle,
**x** présentant des valeurs supérieures ou égales à zéro, et la valeur moyenne arithmétique pondérée avec les proportions de quantités de matière de **x** sur tous les méthylpolysiloxanes linéaires étant comprise entre 3 et 20, et
**y** présentant des valeurs supérieures ou égales à 3, et la valeur moyenne arithmétique pondérée avec les proportions de quantités de matière de **y** sur tous les méthylpolysiloxanes cycliques étant comprise entre 3 et 6.

5. Procédé selon une ou plusieurs des revendications précédentes, selon lequel la viscosité du Si-HTF frais à 25 °C est de 1 à 100 mPa*s.

6. Procédé selon une ou plusieurs des revendications précédentes, selon lequel 1 à 30 pour cent du Si-HTF présent dans l'unité est remplacé en 365 jours d'exploitation.

7. Procédé selon une ou plusieurs des revendications précédentes, selon lequel la partie éliminée du Si-HTF usagé est traitée et recyclée en tant que Si-HTF frais dans l'unité.

8. Procédé selon une ou plusieurs des revendications précédentes, selon lequel l'unité exploitée dans le procédé est un dispositif thermique solaire ou un moteur thermique.
